# EUROPÄISCHE PATENTSCHRIFT

(11) **EP 2 176 161 B1**
(45) Veröffentlichungstag und Bekanntmachung des Hinweises auf die Patenterteilung: **22.12.2010**
(21) Anmeldenummer: 08774862.0
(22) Anmeldetag: 08.07.2008
(51) Int. Cl.: C01B 21/26, C01B 21/40

(54) **VERFAHREN ZUR HERSTELLUNG VON SALPETERSÄURE MIT EINER KONZENTRATION IM BEREICH VON 50 BIS 77,8 GEW.-%**
PROCESS FOR PREPARING NITRIC ACID HAVING A CONCENTRATION IN THE RANGE FROM 50 TO 77.8% BY WEIGHT
PROCÉDÉ DE FABRICATION D'ACIDE NITRIQUE AVEC UNE CONCENTRATION DE 50 À 77,8 % EN POIDS

(30) Priorität: 09.07.2007 EP 07112044
(43) Veröffentlichungstag der Anmeldung: 21.04.2010
(73) Patentinhaber: BASF SE, 67056 Ludwigshafen (DE)
(72) Erfinder: KNEUPER, Heinz-Josef, 67150 Niederkirchen (DE); LÖNING, Jan-Martin, 67251 Freinsheim (DE); MOLLNER, Stephanie, 68163 Mannheim (DE); NICKEL, Jörg Torsten, 76229 Karlsruhe (DE)
(86) Internationale Anmeldenummer: PCT/EP2008/058816
(87) Internationale Veröffentlichungsnummer: WO 2009/007355

(56) Entgegenhaltungen:
- WO-A-01/68520
- US-A- 4 219 536

## Beschreibung

Die Erfindung betrifft ein Verfahren zur Herstellung von Salpetersäure mit einer Konzentration im Bereich von 50 bis 77,8 Gew.-%.

Salpetersäure wird großtechnisch ausschließlich durch katalytische Gasphasenoxidation von Ammoniak hergestellt, die von Ostwald zu Beginn des letzten Jahrhunderts entwickelt wurde. Dabei wird gasförmiger Ammoniak mit Luft an Katalysatornetzen, in der Regel aus Platin oder Platin-Rhodium-Legierungen, verbrannt. Hierbei wird das Mengenverhältnis von Ammoniak und Luft so eingestellt, dass ein stöchiometrischer Überschuss an Sauerstoff gegenüber Ammoniak vorliegt.

Bei der Ammoniakverbrennung wird ein Gasgemisch erhalten, das Stickstoffmonoxid, im Folgenden als NO abgekürzt und daneben noch überschüssigen Sauerstoff, im Folgenden als O₂ abgekürzt, enthält. Das NO und O₂ enthaltende Reaktionsgemisch der katalytischen Gasphasenoxidation von Ammoniak wird abgekühlt, wobei eine Teilkondensation stattfindet und NO mit dem überschüssigen O₂ in einer Gleichgewichtsreaktion weiter zu Stickstoffdioxid, im Folgenden als NO₂ bezeichnet, oxidiert wird, das zu Distickstofftetroxid, im Folgenden als N₂O₄ bezeichnet, dimerisiert. Hierbei wird eine wässrige Salpetersäurelösung sowie ein Gasstrom, enthaltend NO₂/N₂O₄, erhalten, wobei der Gasstrom in der Regel etwa um den Faktor 5 bis 6 größer ist als der Mengenstrom der wässrigen Lösung. Der Gasstrom wird einer Gegenstromabsorption mit Wasser zugeführt, wobei NO₂ in Form von N₂O₄, der reaktiven Spezies desselben, unter Bildung von Salpetersäure reagiert. Diese Reaktion ist exotherm und wird durch hohe Drücke und niedrige Temperaturen begünstigt.

In den meisten industriellen Anlagen zur Herstellung von Salpetersäure wird nach dem Zweidruck-Verfahren gearbeitet (vgl. Ullmann's Encyclopedia of Industrial Chemistry, Release 2006, 7th Edition, "Nitric Acid, Nitrous Acid and Nitrogen Oxides") wobei Ammoniak bei niedrigerem Druck, häufig von etwa 5 bar mit Luft verbrannt wird, da die Ausbeute dieser Reaktion mit steigendem Druck abnimmt. Die Gegenstromabsorption von NO₂/N₂O₄ mit Prozesswasser wird bei gegenüber der Ammoniakverbrennung erhöhtem Druck, häufig im Bereich von etwa 4 bis 20 bar, in der Regel in Kolonnen mit gekühlten Siebböden, durchgeführt.

In den obigen Verfahrensschritten wird Wasser gebildet bzw. eingetragen, so dass die erreichbare Maximalkonzentration der Salpetersäure begrenzt ist.

Bei einer Tonne 68 gew.-%iger Salpetersäure stammt das Wasser aus den folgenden Quellen:
54 kg, entsprechend 17 %, aus Prozessluft mit 25°C und 80 % Luftfeuchte,
205 kg, entsprechend 64 %, Reaktionswasser und
61 kg, entsprechend 19 %, Prozesswasser, das im Absorber eingesetzt wurde.

In jüngerer Zeit ist der Bedarf an Salpetersäure mittlerer Konzentration, im Bereich der azeotropen Zusammensetzung von ca. 68 Gew.-% Salpetersäure in Wasser, für die Herstellung von großtechnischen Produkten, insbesondere den Diisocyanaten Toluoldiisocyanat (TDI) und Methylendiphenyldiisocyanat (MDI) zur Herstellung von Polyurethanen gestiegen. Salpetersäure mit einer Konzentration im Bereich der azeotropen Zusammensetzung wird als so genannte azeotrope Salpetersäure bezeichnet.

In der oben angegebenen Wasserbilanz im Verfahren zur Herstellung von Salpetersäure durch Ammoniakoxidation ist der Wassereintrag über das Reaktionswasser stöchiometrisch bedingt und somit nicht beeinflussbar. Die stöchiometrische Grenzkonzentration ist 77,8 Gew.-% Salpetersäure. Die erreichbare Grenzkonzentration sinkt unter Berücksichtigung der Brennereffizienz und des zusätzlichen Wassereintrags durch Sekundärreaktionen (Verbrennung zu Stickstoff und Distickstoffmonoxid) auf etwa 76,6 %.

Der Wassereintrag über das Prozesswasser kann zwar gesteuert werden, für einen stabilen Betrieb der Absorptionskolonne und um die Verluste an Stickoxiden, im Folgenden als NOₓ bezeichnet, über das Absorberabgas aus wirtschaftlichen und umwelttechnischen Gründen zu minimieren, häufig im Bereich von etwa 20 bis 500 ppm, ist jedoch ein bestimmter Mindesteintrag an Prozesswasser erforderlich.

Als Stickoxide, NOₓ, werden, wie üblich, Gemische, enthaltend NO, NO₂, N₂O₄, und daneben weitere N-O-Verbindungen, mit anderer Stöchiometrie, verstanden.

Der Wassereintrag in das Verfahren über den Wasserdampfgehalt der Prozessluft ist von den klimatischen Bedingungen am Anlagenstandort abhängig. Der Wasserdampfgehalt der Prozessluft kann durch Vortrocknung reduziert werden.

Ein derartiges Verfahren ist in WO 01/68520 vorgeschlagen. Danach wird die Prozessluft vor der Zuführung zur Salpetersäureanlage durch Abkühlung vorgetrocknet, wobei durch Taupunktunterschreitung Wasserdampf auskondensiert, und anschließend die vorgetrocknete Prozessluft erneut aufgewärmt und der Ammoniakoxidation zugeführt wird. Nachteilig ist hierbei, dass das Verfahren aufwändig ist, insbesondere dass zusätzliche Apparate für die Abkühlung und erneute Aufheizung der Prozessluft erforderlich sind, mit entsprechend erhöhten Investitions- und Betriebskosten.

Es war demgegenüber Aufgabe der Erfindung, ein Verfahren zur Herstellung von Salpetersäure mit einer Konzentration im Bereich der azeotropen Zusammensetzung mit Wasser, von etwa 50 bis 77,8 Gew.-%, herzustellen, das technisch einfach durchführbar ist und das die oben dargelegten Nachteile nicht aufweist.

Die Lösung besteht in einem Verfahren zur Herstellung von Salpetersäure mit einer Konzentration im Bereich von 50 bis 77,8 Gew.-% durch
- katalytische Gasphasenoxidation von Ammoniak mit einem überstöchiometrischen Anteil an Prozessluft unter Erhalt eines NO und O₂ enthaltenden Gasgemisches,
- Abkühlung/Kondensation des NO und O₂ enthaltenden Gasgemisches, wobei NO durch O₂ weiter zu NO₂/N₂O₄ oxidiert wird, unter Erhalt einer Salpetersäure enthaltenden wässrigen Lösung und eines NO₂/N₂O₄ enthaltenden Gasstromes und
- Gegenstromabsorption des NO₂/N₂O₄ aus dem NO₂/N₂O₄ enthaltenden Gasstrom in Prozesswasser in einem Absorber, unter Erhalt der Salpetersäure mit einer Konzentration im Bereich von 50 bis 77,8 Gew.-% und eines NOₓ enthaltenden Absorberabgases, das dadurch gekennzeichnet ist, dass
- der Wassergehalt der Salpetersäure auf eine Konzentration im Bereich von 50 bis 77,8 Gew.-% und
- der NOₓ-Gehalt des Absorberabgases auf eine Konzentration im Bereich von 20 bis 500 ppm geregelt werden, indem der Wassergehalt der der katalytischen Gasphasenoxidation zugeführten Prozessluft kontinuierlich gemessen und in Abhängigkeit hiervon die dem Absorber zugeführte Prozesswassermenge eingestellt wird.

Es wurde somit gefunden, dass es in einfacher Weise möglich ist, die Prozessgröße Wassergehalt der Salpetersäure auf einen Wert im Konzentrationsbereich von 50 bis 77,8 Gew.-% und die Prozessgröße NOₓ-Gehalt des Absorberabgases auf eine Konzentration im Bereich von 150 bis 500 ppm zu regeln, indem als Stellgröße der Wassergehalt der der katalytischen Gasphasenoxidation zugeführten Prozessluft kontinuierlich gemessen und in Abhängigkeit hiervon als Regelgröße die dem Absorber zugeführte Prozesswassermenge eingestellt wird.

Hierbei wird die Regelgröße, die Prozesswassermenge, so eingestellt, dass die Wasserbilanz zum Erreichen einer vorgegebenen Salpetersäure-Zielkonzentration und gleichzeitig eine vorgegebene Abgaskonzentration des Absorberabgases bezüglich NOₓ, jeweils in den oben angegebenen Bereichen, eingehalten werden.

Die Wasserbilanz zum Erreichen einer vorgegebenen Salpetersäure-Zielkonzentration ergibt sich aus folgender Gleichung:
die dem Absorber zugeführte Prozesswassermenge entspricht der Summe aus der Salpetersäure-Produktmenge mal der Wasserkonzentration im Produkt, dem zur Salpetersäurebildung benötigten Wasser und der NOₓ-Menge im Absorberabgas, multipliziert mit einem absorberspezifischen Faktor, wovon das Reaktionswasser der katalytischen Ammoniakverbrennung und die über die Prozessluftmenge eingetragene Luftfeuchtigkeit abgezogen werden.

Bislang sind derartige Regelkonzepte nicht bekannt, die Regelung der Prozesswasserzufuhr zum Absorber erfolgt ohne Berücksichtigung des Wassergehaltes der dem Verfahren zugeführten Prozessluft ausschließlich auf die Prozessgrößen vor der Konzentration des Produktes Salpetersäure und NOₓ-Werte des Absorberabgases.

Durch das erfindungsgemäße Verfahren wird Salpetersäure mit einer Konzentration im Bereich der Zusammensetzung des Azeotrops mit Wasser, von 50 bis 77,8 Gew.-% zur Verfügung gestellt. Bevorzugt liegt die Konzentration der Salpetersäure, die durch das erfindungsgemäße Verfahren hergestellt wird, im Bereich von 60 bis 77,8 Gew.-%, weiter bevorzugt im Bereich von 68 bis 70 Gew.-%.

Der NOₓ-Gehalt des Absorberabgases wird auf 20 bis 500 ppm, insbesondere auf eine Konzentration im Bereich von 150 bis 400 ppm, geregelt.

Bevorzugt ist eine zweistufige Verfahrensführung, mit niedrigerem Druck für die katalytische Gasphasenoxidation von Ammoniak gegenüber dem Druck für die Gegenstromabsorption des NO₂/N₂O₄ im Prozesswasser; bevorzugt ist eine Betriebsweise mit einem Absorberdruck zwischen 4 und 20 bar, weiter bevorzugt zwischen 7 und 14 bar.

Als Absorber wird bevorzugt eine Bodenkolonne eingesetzt, in der das Prozesswasser auf dem obersten Boden aufgegeben und im Gegenstrom zu dem NO₂/N₂O₄ enthaltenden Gasgemisch geführt wird, wobei unter Druck die Reaktion zur Salpetersäure stattfindet. Vorteilhaft kann das Prozesswasser zusätzlich zur Aufgabe auf den obersten Boden des Absorbers auch auf einen oder mehreren weiteren Böden aufgegeben werden, wodurch eine verkürzte Reaktionszeit zwischen einer Prozessänderung und dem Nachstellen der Regelgröße, das heißt der Prozesswassermenge, erreicht wird.

In einer weiter bevorzugten Verfahrensvariante kann der Absorberdruck konstant auf einen maximal möglichen Wert durch eine aktive Regelung des Verdichters, der vor dem Absorber angeordnet ist, gehalten werden, indem der Verdichter so gewählt wird, dass er auch bei Schwankungen des Volumenstromes und des Vordruckes des NO₂/N₂O₄ enthaltenden Gasstromes stets einen konstanten Enddruck gewährleistet.

Die Erfindung wird im Folgenden anhand einer Figur sowie von Ausführungsbeispielen näher erläutert.

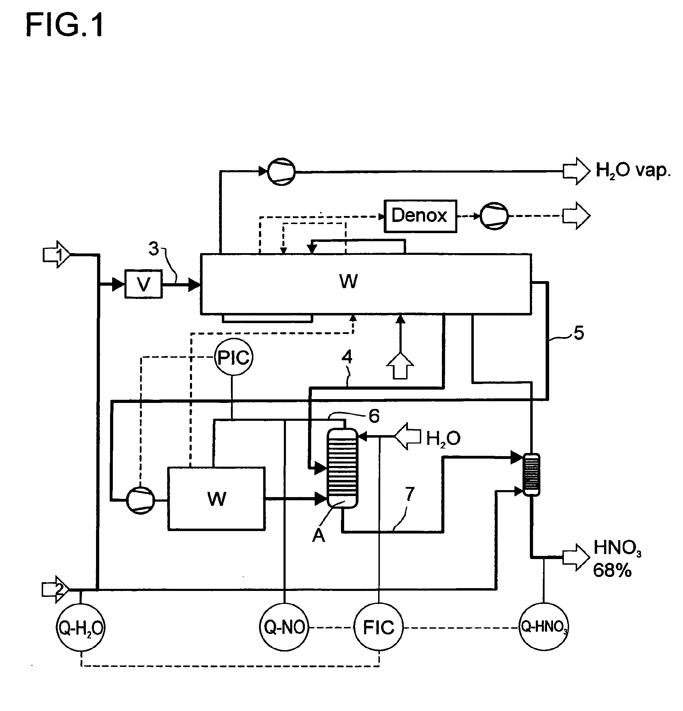

Die einzige Figur 1 zeigt die schematische Darstellung einer bevorzugten erfindungsgemäßen Anlage zur Herstellung von azeotroper Salpetersäure, mit Zuführung von Ammoniak, Strom 1 und Prozessluft, Strom 2, zu einer katalytischen Verbrennungseinheit V unter Erhalt eines NO und O₂ enthaltenden Gasgemisches 3, das in einem Wärmetauscher W abgekühlt und teilkondensiert wird, unter Erhalt einer Salpetersäure enthaltenden wässrigen Lösung 4 und eines NO₂/N₂O₄ enthaltenden Gasstromes 5. Die wässrige Lösung 4 sowie der NO₂/N₂O₄ enthaltende Gasstrom 5, letzterer nach Überleitung über einen Wärmetauscher W, werden einem Absorber zugeführt, auf den im Gegenstrom Prozesswasser H₂O aufgegeben wird, wobei im Absorber NO₂/N₂O₄ zu Salpetersäure reagiert und aus dem Absorbersumpf azeotrope Salpetersäure, Strom 7 und am Absorberkopf ein NOₓ enthaltendes Absorberabgas 6 abgezogen wird. Die auf den Absorber A aufgegebene Prozesswassermenge Q-H₂O, (Regelgröße) wird in Abhängigkeit vom Wassergehalt der Prozessluft 2, dergestalt geregelt, dass die Prozessgrößen, der Wassergehalt des Produktes, der in der Anlage erhaltenen Salpetersäure, Q-HNO₃, sowie der NOₓ-Gehalt des Absorberabgases, Q-NOₓ, jeweils im vorgegebenen Bereich geregelt werden. Das Absorberabgas 6 wird aufgeheizt, indem es über einen ersten Wärmetauscher W geleitet wird, worin es den NO₂/N₂O₄ enthaltenden Gasstrom 5 abkühlt, der zum Absorber A geleitet wird und anschließend in einem weiteren Wärmetauscher W durch Wärmetausch mit dem Gasgemisch 3 der katalytischen Verbrennung von Ammoniak. Das im so vorgewärmten Absorberabgas enthaltene NOₓ wird anschließend in üblicher Weise, das heißt in einem üblicherweise als Denox bezeichneten katalytischen Reaktor unter Zugabe von Ammoniak vollständig zu Stickstoff und Wasser verbrannt.

In Figur 1 bezeichnet PIC ein Druckanzeige- und Regelinstrument (Pressure Indicator Control) und FIC ein Massenflussanzeige- und Regelinstrument (Flow Indicator Control).

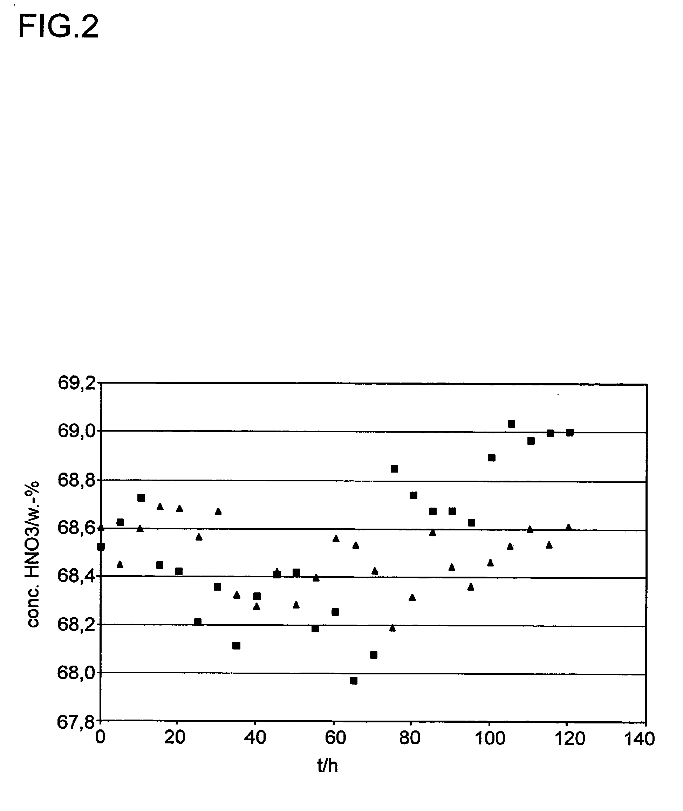

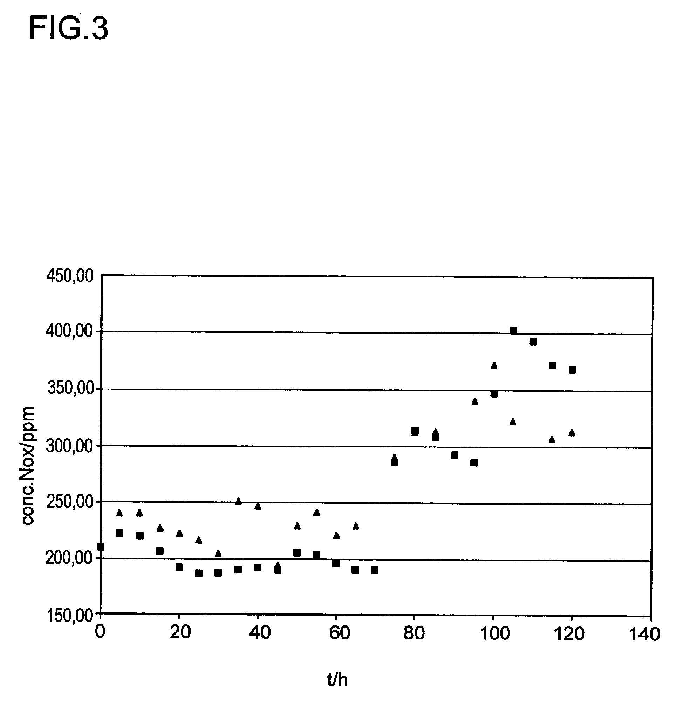

In einer Salpetersäureanlage entsprechend der schematischen Darstellung in Figur 1 wurden Betriebsversuche unter unterschiedlichen atmosphärischen Bedingungen, und zwar bei einer Variation zwischen 25°C Lufttemperatur und 84 % Luftfeuchte bis 16°C Lufttemperatur und 62 % Luftfeuchte, durchgeführt. Die Konzentration der erhaltenen Salpetersäure im Gewichtsprozent, conc. HNO₃/w.-%, sowie die NOₓ-Konzentration in ppm, conc. NOx/ppm, im Absorberabgas wurden jeweils mit und ohne erfindungsgemäßer Regelung gemessen und die Ergebnisse in den in Figur 2 bzw. Figur 3 dargestellten Diagrammen über die Zeit in Stunden, t/h, aufgetragen. Figur 2 zeigt, dass die Schwankungsbreite der Salpetersäurekonzentration mit erfindungsgemäßer Regelung, dargestellt durch Rauten, gegenüber der Schwankungsbreite ohne die erfindungsgemäße Regelung, dargestellt durch Quadrate, enger ist.

Gleiches gilt für die Schwankungsbreite der NOₓ-Konzentration im Absorberabgas, wie aus Figur 3 ersichtlich, worin die gemessenen NOₓ-Konzentrationen für ein Verfahren mit erfindungsgemäßer Regelung durch Dreiecke und die NOₓ-Konzentrationen für dasselbe Verfahren, ohne Regelung, durch Quadrate dargestellt sind.

## Patentansprüche

1. Verfahren zur Herstellung von Salpetersäure mit einer Konzentration im Bereich von 50 bis 77,8 Gew.-% durch
- katalytische Gasphasenoxidation von Ammoniak (1) mit einem überstöchiometrischen Anteil an Prozessluft (2) unter Erhalt eines NO und O₂ enthaltenden Gasgemisches (3),
- Abkühlung/Kondensation des NO und O₂ enthaltenden Gasgemisches (3), wobei NO durch O₂ weiter zu NO₂/N₂O₄ oxidiert wird, unter Erhalt einer Salpetersäure enthaltenden wässrigen Lösung (4) und eines NO₂/N₂O₄ enthaltenden Gasstromes (5) und
- Gegenstromabsorption des NO₂/N₂O₄ aus dem NO₂/N₂O₄ enthaltenden Gasstrom (5) in Prozesswasser (H₂O) in einem Absorber (A), unter Erhalt der Salpetersäure (7) mit einer Konzentration im Bereich von 50 bis 77,8 Gew.-% und eines NOₓ enthaltenden Absorberabgases (6) , **dadurch gekennzeichnet, dass**
- der Wassergehalt der Salpetersäure (7) auf eine Konzentration im Bereich von 50 bis 77,8 Gew.-% und
- der NOₓ-Gehalt des Absorberabgases (6) auf eine Konzentration im Bereich von 20 bis 500 ppm geregelt werden, indem der Wassergehalt der der katalytischen Gasphasenoxidation zugeführten Prozessluft (2) kontinuierlich gemessen und in Abhängigkeit hiervon die dem Absorber (A) zugeführte Prozesswassermenge (Q-H₂O) eingestellt wird.

2. Verfahren nach Anspruch 1, **dadurch gekennzeichnet, dass** die Konzentration der Salpetersäure (7) in einem Bereich von 60 bis 77,8 Gew.-% vorgegeben wird.

3. Verfahren nach Anspruch 2, **dadurch gekennzeichnet, dass** die Konzentration der Salpetersäure (7) in einem Bereich von 68 bis 70 Gew.-% vorgegeben wird.

4. Verfahren nach einem der Ansprüche 1 bis 3, **dadurch gekennzeichnet, dass** der NOₓ-Gehalt des Absorberabgases (6) auf eine Konzentration im Bereich von 150 bis 400 ppm geregelt wird.

5. Verfahren nach einem der Ansprüche 1 bis 3, **dadurch gekennzeichnet, dass** der Absorber (A) bei einem Druck von 4 bis 20 bar betrieben wird.

6. Verfahren nach Anspruch 5, **dadurch gekennzeichnet, dass** der Absorber (A) bei einem Druck von 7 bis 14 bar betrieben wird.

7. Verfahren nach einem der Ansprüche 1 bis 6, **dadurch gekennzeichnet, dass** der Absorber (A) eine Bodenkolonne ist und dass das Prozesswasser (H₂O) auf den bersten Boden der Absorberkolonne und zusätzlich auf einen oder mehreren weiteren Böden der Absorberkolonne aufgegeben wird.

8. Verfahren nach einem der Ansprüche 1 bis 7, wobei vor dem Absorber (A) ein Verdichter angeordnet ist, **dadurch gekennzeichnet, dass** der Verdichter so gewählt wird, dass er auch bei Schwankungen des Volumenstromes und des Vordruckes des NO₂/N₂O₄ enthaltenden Gasstromes (5) stets einen konstanten Enddruck gewährleistet.

## Claims

1. A process for preparing nitric acid with a concentration in the range from 50 to 77.8% by weight by
- catalytic gas phase oxidation of ammonia (1) with a superstoichiometric proportion of process air (2) to obtain a gas mixture (3) comprising NO and O₂,
- cooling/condensation of the gas mixture (3) comprising NO and O₂, in the course of which NO is oxidized further by O₂ to NO₂/N₂O₄ to obtain an aqueous solution (4) comprising nitric acid and a gas stream (5) comprising NO₂/N₂O₄ and
- countercurrent absorption of the NO₂/N₂O₄ from the gas stream (5) comprising NO₂/N₂O₄ in process water (H₂O) in an absorber (A) to obtain the nitric acid (7) with a concentration in the range from 50 to 77.8% by weight and an NOₓ- comprising absorber offgas (6), wherein
- the water content of the nitric acid (7) is regulated to a concentration in the range from 50 to 77.8% by weight and
- the NOₓ content of the absorber offgas (6) to a concentration in the range from 20 to 500 ppm, by continuously measuring the water content of the process air (2) supplied to the catalytic gas phase oxidation and, as a function of this, adjusting the amount of process water (Q-H₂O) fed to the absorber (A).

2. The process according to claim 1, wherein the concentration of the nitric acid (7) is set within a range from 60 to 77.8% by weight.

3. The process according to claim 2, wherein the concentration of the nitric acid (7) is set within a range from 68 to 70% by weight.

4. The process according to any of claims 1 to 3, wherein the NOₓ content of the absorber offgas (6) is regulated to a concentration in the range from 150 to 400 ppm.

5. The process according to any of claims 1 to 3, wherein the absorber (A) is operated at a pressure of from 4 to 20 bar.

6. The process according to claim 5, wherein the absorber (A) is operated at a pressure of from 7 to 14 bar.

7. The process according to any of claims 1 to 6, wherein the absorber (A) is a tray column and the process water (H₂O) is introduced at the uppermost tray of the absorber column and additionally to one or more further trays of the absorber column.

8. The process according to any of claims 1 to 7 where a compressor is arranged upstream of the absorber (A), wherein the compressor is selected such that, even in the case of variations in the volume flow and in the upstream pressure of the gas stream (5) comprising NO₂/N₂O₄, it always ensures a constant end pressure.

## Revendications

1. Procédé de fabrication d'acide nitrique ayant une concentration dans la plage allant de 50 à 77,8 % en poids, par
- oxydation catalytique en phase gazeuse d'ammoniac (1) avec une proportion sur-stoechiométrique d'air de procédé (2) pour obtenir un mélange gazeux contenant du NO et de l'O₂ (3),
- refroidissement/condensation du mélange gazeux contenant du NO et de l'O₂ (3), le NO étant davantage oxydé par O₂ en NO₂/N₂O₄, pour obtenir une solution aqueuse contenant de l'acide nitrique (4) et un courant gazeux contenant du NO₂/N₂O₄ (5) et
- absorption à contre-courant du NO₂/N₂O₄ à partir du courant gazeux contenant du NO₂/N₂O₄ (5) dans de l'eau de procédé (H₂O) dans un absorbeur (A), pour obtenir l'acide nitrique (7) ayant une concentration dans la plage allant de 50 à 77,8 % en poids et un gaz d'échappement de l'absorber contenant des NOₓ (6), **caractérisé en ce que**
- la teneur en eau de l'acide nitrique (7) est ajustée à une concentration dans la plage allant de 50 à 77,8 % en poids et
- la teneur en NOₓ du gaz d'échappement de l'absorbeur (6) est ajustée à une concentration dans la plage allant de 20 à 500 ppm, la teneur en eau de l'air de procédé (2) introduit dans l'oxydation catalytique en phase gazeuse étant mesurée en continu et la quantité d'eau de procédé (Q-H₂O) introduite dans l'absorbeur (A) étant ajustée en conséquence.

2. Procédé selon la revendication 1, **caractérisé en ce que** la concentration de l'acide nitrique (7) est fixée dans une plage allant de 60 à 77,8 % en poids.

3. Procédé selon la revendication 2, **caractérisé en ce que** la concentration de l'acide nitrique (7) est fixée dans une plage allant de 68 à 70 % en poids.

4. Procédé selon l'une quelconque des revendications 1 à 3, **caractérisé en ce que** la teneur en NOₓ du gaz d'échappement de l'absorbeur (6) est ajustée à une concentration dans la plage allant de 150 à 400 ppm.

5. Procédé selon l'une quelconque des revendications 1 à 3, **caractérisé en ce que** l'absorbeur (A) est exploité à une pression de 4 à 20 bar.

6. Procédé selon la revendication 5, **caractérisé en ce que** l'absorbeur (A) est exploité à une pression de 7 à 14 bar.

7. Procédé selon l'une quelconque des revendications 1 à 6, **caractérisé en ce que** l'absorbeur (A) est une colonne à plateaux et **en ce que** l'eau de procédé (H₂O) est introduite sur le plateau le plus élevé de la colonne d'absorption et également sur un ou plusieurs autres plateaux de la colonne d'absorption.

8. Procédé selon l'une quelconque des revendications 1 à 7, un compresseur étant placé avant l'absorbeur (A), **caractérisé en ce que** le compresseur est choisi de manière à toujours garantir une pression finale constante, même lors des fluctuations du débit volumique et de la pression amont du courant gazeux contenant du NO₂/N₂O₄ (5).
